# EUROPEAN PATENT APPLICATION

(11) **EP 4 279 652 A1**
(43) Date of publication of application: **22.11.2023**
(21) Application number: 22739556.3
(22) Date of filing: 05.01.2022
(51) Int. Cl.: D06H 7/02, D06C 3/00, B65H 35/04

(54) **SPREADING WORK METHOD AND NUMBERING SPREADING SYSTEM**

(30) Priority: 18.01.2021 KR 20210006453
(71) Applicant: BMO Co., Ltd., Busan 46018 (KR)
(72) Inventor: CHOI, Kyu Su, Busan 48109 (KR)
(74) Representative: Gulde & Partner
(86) International application number: PCT/KR2022/000141
(87) International publication number: WO 2022/154358

(57) **Abstract**

The present invention relates to a spreading work method and a numbering spreading system and, more particularly, to a spreading work method using a spreading machine, comprising: a generation step for generating spreading work plan information by using a dedicated input program for a spreading work; a transmission step for transmitting the spreading work plan information to the spreading machine after the generation step; and a spreading step for performing, by the spreading machine, a spreading work according to the spreading work plan information after the transmission step, wherein the spreading work plan information comprises numbering information, and to a numbering spreading system comprising: a computer in which a dedicated input program for a spreading work is installed and generating spreading work plan information; and a spreading machine that receives the spreading work plan information from the computer and performs a spreading work according to the spreading work plan information, wherein the spreading work plan information comprises numbering information.

## Description

### Technical Field

The present invention relates to a spreading method and a numbering spreading system, more particularly to a spreading method and a numbering spreading system that are capable of performing automatic numbering for fabric.

### Background Art

Generally, a spreading machine is a device that can spreads a roll of fabric to lay one or more pieces of fabric on top of a cutting table (work table), while reciprocating above the cutting table. The spreading machine is used to easily cut the fabric.

To cut the fabric, in specific, one or more pieces of fabric to a given length are laid on top of one another using a long bar or the like, and next, the fabric is cut to desired shapes using cutting means. As a device for removing a worker's inconveniences occurring from the use of the long bar when the fabric is folded, in this case, the spreading machine is used.

The spreading machine reciprocates horizontally above the cutting table to spread a roll of fabric rotatably disposed on top thereof on top of the cutting table in such a way that one or more pieces of fabric are laid on top of one another, thereby allowing a large number of pieces of fabric to be simultaneously cut.

For example, a wrinkle and air pocket prevention spreading machine and a spreading method are disclosed in Korean Patent No. 10-1661294 (Issued on September 29, 2016).

In the conventional technology, however, upon manual cutting or automatic cutting using CAM after spreading, numbering for uniformly applying numbers to the same pieces of fabric according to fabric shading is manually performed, so that the numbering speed becomes slow, a failure rate owing to a worker's error becomes high, and a high labor cost becomes required.

### Disclosure of Invention

### Technical Problem

Accordingly, the present invention has been made in view of the above-mentioned problems occurring in the related art, and it is an object of the present invention to provide a spreading method and a numbering spreading system that are capable of performing automatic numbering for fabric.

The technical problems of the present invention are not limited as mentioned above, and other technical problems not mentioned herein will be obviously understood by one of ordinary skill in the art through the following description.

### Technical Solution

To accomplish the above-mentioned objects, according to one aspect of the present invention, there is provided a spreading method using a spreading machine, including a generation step of generating spreading plan information through a dedicated input program for spreading, a transmission step of transmitting the spreading plan information to the spreading machine after the generation step, and a spreading step of allowing the spreading machine to perform the spreading according to the spreading plan information after the transmission step, wherein the spreading plan information comprises numbering information.

According to the present invention, desirably, the generation step may include an execution step of executing the dedicated input program for spreading and a setting step of setting position coordinates on which numbering for the fabric is required after the execution step.

According to the present invention, desirably, the spreading step may include an unwinding step of unwinding the fabric, while the fabric is transferred in one direction in a state where the front end thereof is held, a cutting step of cutting the fabric in a transverse direction after the unwinding step, and a numbering step of performing numbering on the surface of the fabric after the cutting step.

To accomplish the above-mentioned objects, according to another aspect of the present invention, there is provided a numbering spreading system including a computer in which a dedicated input program for spreading is installed to generate spreading plan information and a spreading machine for receiving the spreading plan information from the computer to perform spreading according to the spreading plan information, wherein the spreading plan information comprises numbering information.

According to the present invention, desirably, the spreading machine may include a head part disposed on one side thereof to perform printing according to the numbering information, so that after the spreading machine is transferred in one direction, while holding the front end of fabric, cuts the fabric in a transverse direction in a state of spreading the fabric, and then returns to an original position thereof in a state of releasing the holding state for the front end of the fabric, the head part performs numbering on the surface of the fabric.

### Advantageous Effects of the Invention

Accordingly, the spreading method and the numbering spreading system according to the present invention are carried out to automatically perform the numbering work for the fabric, so that the numbering work is done, while being compared to the CAD file, thereby advantageously making the product more easily.

Further, the spreading method and the numbering spreading system according to the present invention are carried out to allow the head part to perform numbering on the surface of the fabric after the spreading machine is transferred in one direction, while holding the front end of the fabric, cuts the fabric in the transverse direction in a state of spreading the fabric, and then returns to an original position thereof in a state of releasing the holding state for the front end of the fabric, thereby drastically reducing the time required for the numbering and a failure rate occurring in the process of the numbering.

Moreover, the spreading method and the numbering spreading system according to the present invention are carried out to achieve computerization in the spreading and cutting so that during the spreading, the numbering for the fabric to be cut is performed, thereby drastically reducing the time required to make the product because of the unnecessity of the existing manual numbering process.

The effectiveness of the present invention is not limited as mentioned above, and it should be understood to those skilled in the art that the effectiveness of the invention may include another effectiveness as not mentioned above from the detailed description of the present invention.

### Brief Description of Drawings

FIG 1 shows a conventional product manufacturing procedure.
FIG 2 is a perspective view showing a configuration of a numbering spreading system according to the present invention.
FIG 3 is a perspective view showing a head part of a spreading machine of the numbering spreading system according to the present invention.
FIGs. 4 and 5 are enlarged perspective views showing a frame part of the numbering spreading system according to the present invention, wherein the frame part rotates upon transverse transfer of a cutting part.
FIGs. 6 to 10 are sectional views showing operating processes of the spreading machine of the numbering spreading system according to the present invention.
FIG 11 is a flowchart showing a spreading method according to the present invention.
FIG 12 is a flowchart showing sub-steps of a setting step of the spreading method according to the present invention.
FIG 13 is a block diagram showing a configuration for controlling the spreading method according to the present invention.
FIG 14 shows an example of a service screen of a dedicated input program for spreading in the spreading method according to the present invention.
FIG 15 shows expected trajectories and marks of the head part on the service screen of the dedicated input program for spreading in the spreading method according to the present invention.
FIG 16 shows an example where numbering information is generated in the spreading method according to the present invention.

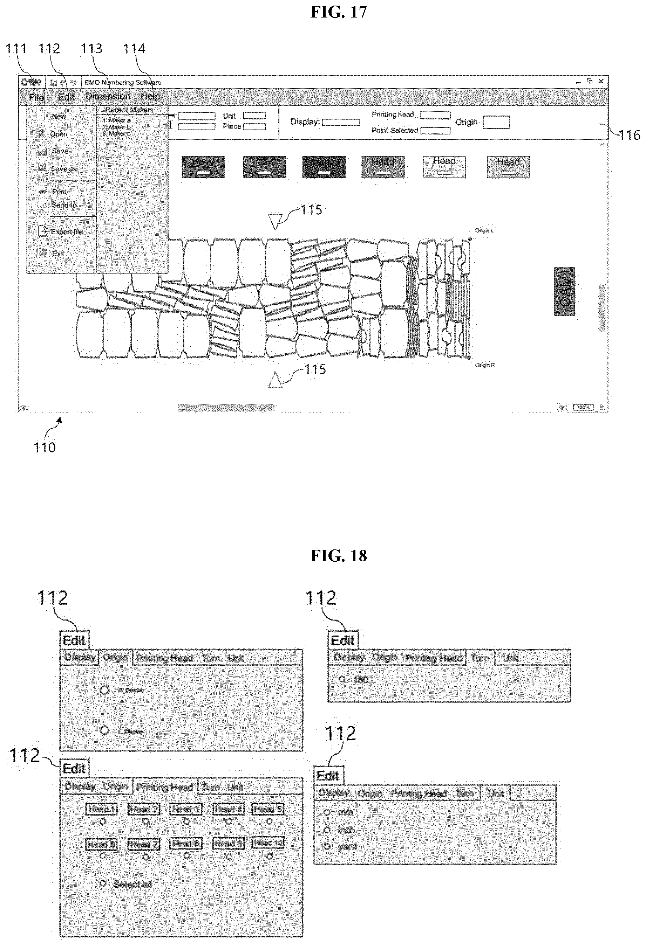

FIGs. 17 and 18 show examples of an interface screen of the dedicated input program for spreading in the spreading method according to the present invention.

### Best Mode for Invention

First, explanations of terms used in the description will be given briefly, and next, the present invention will be described in detail.

The terms used in the present invention are to be given their ordinary and customary meaning to a person of ordinary skill in the art and are not to be limited to a special or customized meaning unless expressly so defined herein. It should be noted that the use of particular terminology when describing certain features or aspect of the disclosure should not be taken to imply that the terminology is being re-defined herein to be restricted to include any specific characteristics of the features or aspects of the disclosure with which that terminology is associated.

In the description, when it is said that one portion is described as "includes" any component, one element further may include other components unless no specific description is suggested.

An explanation of the present invention will be given in detail with reference to the attached drawings so that the present invention will be easily carried out by those skilled in the art. Before the present invention is disclosed and described, it is to be understood that the disclosed embodiments are merely exemplary of the invention, which can be embodied in various forms. Those skilled in the art will envision many other possible variations within the scope of the present invention.

Subjects, solutions, and advantageous effectiveness of the present invention are suggested in the embodiments and drawings as will be discussed later. Objects, characteristics and advantages of the present invention will be more clearly understood from the detailed description as will be described below and the attached drawings.

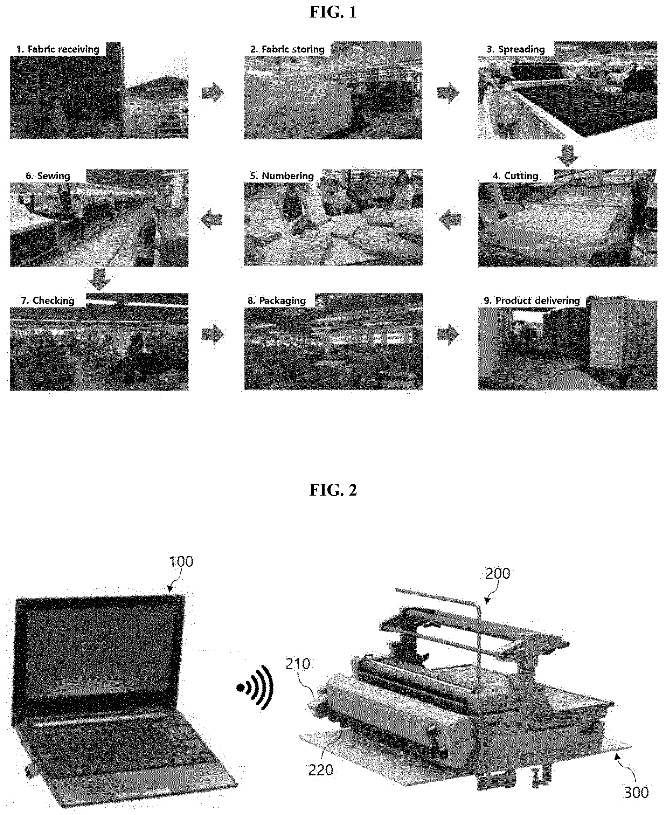

Referring to FIG 1, a procedure for manufacturing a product such as a garment in a sewing factory is as follows. First, fabric is put into the sewing factory, and next, the fabric is stored. If spreading for the fabric is necessary, the spreading is performed, and after that, cutting is performed. Sequentially, numbering is performed. In this case, numbering is a process of marking numbers or the like on cut fabric, that is, pieces of fabric. The pieces of fabric are manufactured to a single finished product through sewing. Next, checking for the finished product is performed, packaging is performed, and the product is finally taken out from the sewing factory. In the conventional practice, the numbering work is manually performed, thereby causing a high failure rate due to errors and substantially extending the time required for the work. According to the present invention, the spreading and numbering works are simultaneously performed, so that the fabric whose spreading is completed is transferred to a cutting machine, while the numbering is being applied thereto.

Hereinafter, an explanation of the present invention will be given in detail with reference to the attached drawings.

Referring to FIG 2, a numbering spreading system according to the present invention includes a computer 100 in which a dedicated input program for spreading is installed to generate spreading plan information (data) and a spreading machine 200 for receiving the spreading plan information from the computer 100 to perform spreading according to the spreading plan information. In this case, the spreading plan information includes numbering information.

First, the computer 100 is prepared. The computer 100 inputs the spreading plan information using the spreading machine 200 and manages the spreading information performed really through the spreading machine 200. For example, a manager inputs the spreading plan information through the dedicated input program installed in the computer 100 and transmits the inputted spreading plan information to the spreading machine 200, so that the spreading based on the spreading plan information is performed through the spreading machine 200.

In this case, the spreading plan information generated from the computer 100 is transmitted to the spreading machine 200 by means of wired communication, wireless communication such as Bluetooth, WiFi, and the like, and a storage device such as USB.

In this case, the spreading plan information including the numbering information further includes a fabric style, a roll No. of fabric, fabric length (QTY), the number of spreading, the number of garments per a piece of fabric spread, predetermined spreading setting of the spreading machine, etc.

The fabric style represents the number applied to a fabric style according to pattern differences of fabric, the roll number represents a predetermined management number of fabric for the management of the fabric, the fabric length (QTY) represents total length of a roll of fabric, the spreading length represents a length of a piece of fabric when a roll of fabric is unwound using the spreading machine.

Further, the number of spreading represents total layers of spreading when a roll of fabric is unwound, which is determined by (length of fabric) ÷ (spreading length).

Besides, the number of garments per a piece of fabric spread represents the number of garments made with a piece of fabric spread.

There are various types of fabric such as soft fabric, hard fabric, spandex fabric, non-spandex fabric, thick fabric, thin fabric, and the like according to materials thereof, and in this case, operating patterns of the spreading machine have to be changed in accordance with the different types of fabric. Accordingly, the operating pattern of the spreading machine is appropriately set, which is the spreading setting of the spreading machine. The spreading setting may be differently provided every spreading machine.

Next, the spreading machine 200 is prepared. The spreading machine 200 receives the spreading plan information generated from the computer 100, performs spreading, and transmits the information of the really performed spreading to the computer 100.

For example, the computer 100, which is controlled by a manager, is generally located in an office, and the spreading machine 200, which operates by a worker, is located on a working site. Accordingly, the computer 100 and the spreading machine 200 are located at remote positions from each other, and in this case, the storage device serves to connect the computer 100 with the spreading machine 200.

In this case, the spreading information includes worked layers of the roll of fabric, fabric usage amount, leftover fabric, the total number of garments through spreading, step work time of spreading machine, step full work time inclusive of standby time, and the like. The worked layers of the roll of fabric represents the number of spreading performed really with the roll of fabric, the fabric usage amount represents the amount (length) of fabric used for spreading, the leftover fabric represents the amount (length) left over after spreading, the total number of garments through spreading means the number of garments to be produced after cutting, the step work time of spreading machine means the pure spreading work time for the roll of fabric, the step full work time represents the total spreading time of the roll of fabric inclusive of the standby time.

In this case, the spreading machine 200 includes its own spreading machine control interface (touch screen), like a conventional spreading machine, and work information is inputted to the control interface by the worker, so that the spreading is performed.

Further, the spreading machine 200 includes a fabric holder for holding the fabric, a fabric feeding roller for feeding the fabric, and a cutting part 210 for cutting the fabric, and the spreading machine 200 is movably installed on a work table 300 on which the spreading is done, so that it performs spreading of the fabric. In this case, a detailed explanation of the same parts of the spreading machine 200 as of the conventional spreading machine will be avoided.

In this case, the spreading machine 200 includes a head part 220 disposed on one side thereof to perform printing according to the numbering information. That is, the head part 220 is provided like a print head including marking means such as ink and serves to print marks 10 on the fabric according to the spreading plan information. In this case, the marks 10 may be freely provided to the form of figures, numbers, and characters only if they transfer the spreading plan information to the worker.

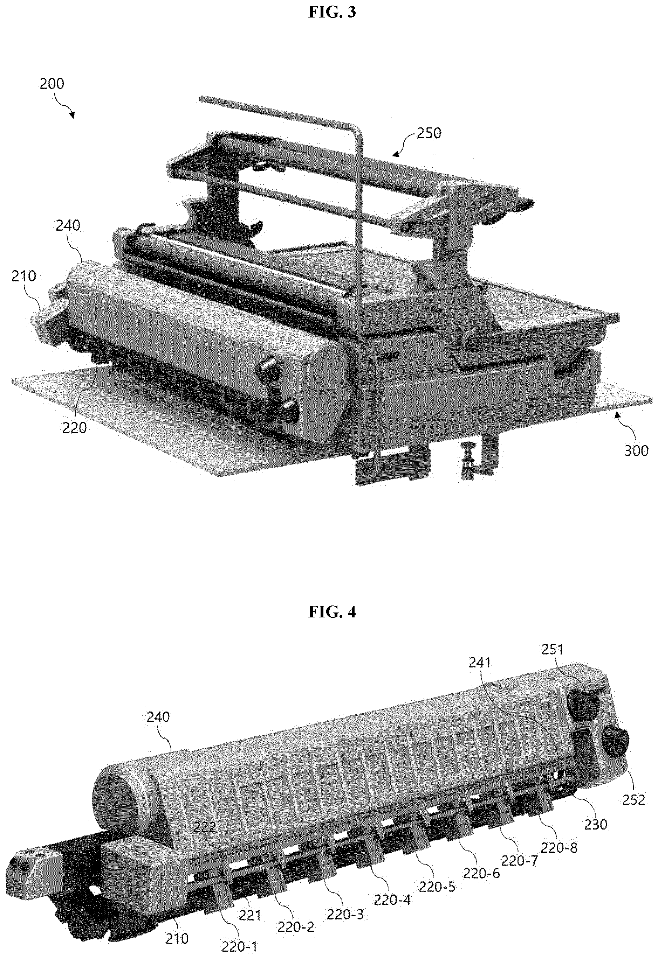

In more specific, as shown in FIGs. 3 and 4, the spreading machine 200 includes a spreading machine body 250 having the fabric holder for holding the fabric, the fabric feeding roller for feeding the fabric, the cutting part 210 for cutting the fabric, and a frame for supporting the fabric holder and the fabric feeding roller to guide the fabric to be transferred to top of the work table 300, a frame part 240 rotatably disposed on one side of the spreading machine body 250, and a shaft 230 disposed on the end of the frame part 240 to pass through at least a portion of the frame part 240.

Further, the frame part 240 has a plurality of position markers 241 arranged parallel with the shaft 230. In this case, the position markers 241 serve to guide the installation position of the head part 220, and they may have shapes of circular grooves or holes, scales, and the like only if they guide the installation position of the head part 220.

Further, the head part 220 includes a clamp 221 for fixing to the shaft 230 and protrusions 222 protruding from the clamp 221 in a direction toward the position markers 241.

In specific, the head part 220 is fixed to the shaft 230 by means of the clamp 221, and the position markers 241 and the protrusions 222 correspond to one another by the worker, so that the head part 220 is easily fixed to a position required.

Further, the head part 220 includes a sensor 223 disposed on one side thereof to sense the position and speed thereof. In specific, the sensor 223 serves to detect position information and transfer speed information of the head part 220 and thus transmit the detected information to the computer 100. Accordingly, it is checked in real time whether the marks 10 are accurately printed through the sensor 223. In this case, the sensor 223 is disposed on one side of a plurality of wheels (not shown) that are located on the underside of the spreading machine body 250 to transfer the spreading machine body 250. Further, the spreading machine body 250 has a driving motor (not shown) disposed in the interior thereof to provide a driving force with which it is transferred, and the plurality of wheels receive the power generated from the driving motor to transfer the spreading machine body 250.

The frame part 240 is rotatably coupled to the spreading machine body 250. For example, the frame part 240 is hinge-coupled to a shaft (not shown) disposed on one side of the spreading machine body 250, and the shaft is rotated by a motor 251 disposed on one side of the spreading machine body 250. In specific, as the shaft is rotated by the motor 251, the frame part 240 rotates, and only if the frame part 240 rotates, the shape of the frame part 240 does not matter.

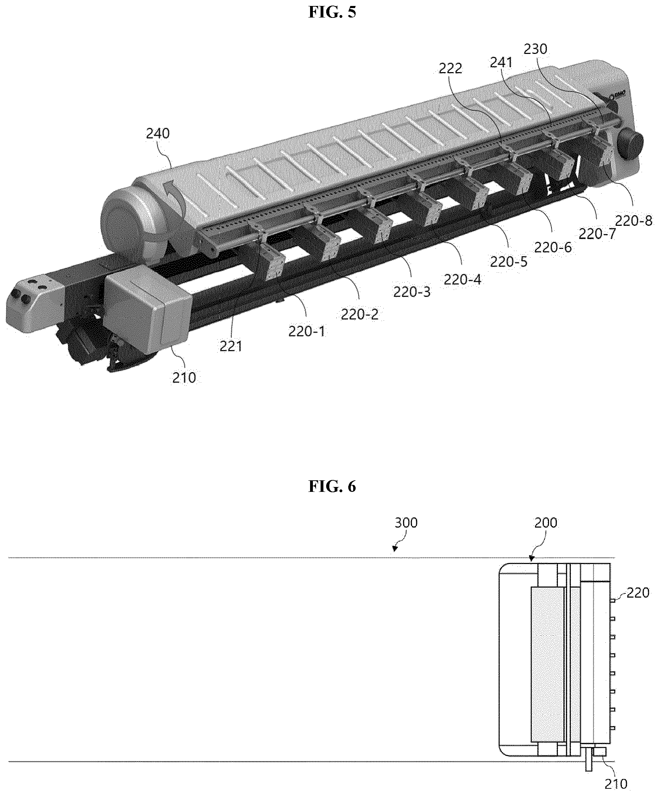

In this case, as shown in FIG 5, when the cutting part 210 is transferred in a transverse direction with respect to the fabric to cut the fabric, the frame part 240 rotates in a direction distant from the fabric being cut. After that, if the cutting of the cutting part 210 is completed, the frame part 240 rotates to its original position to allow the head part 220 to perform the printing in a state where the end of the head part 220 comes into close contact with top of the fabric. In this case, the cutting part 210 performs a reciprocating motion by means of a transfer motor 252 disposed on one side of the spreading machine body 250, and only if the cutting part 210 performs a reciprocating motion in the transverse direction of the spreading machine body 250, the shape of the cutting part 210 does not matter.

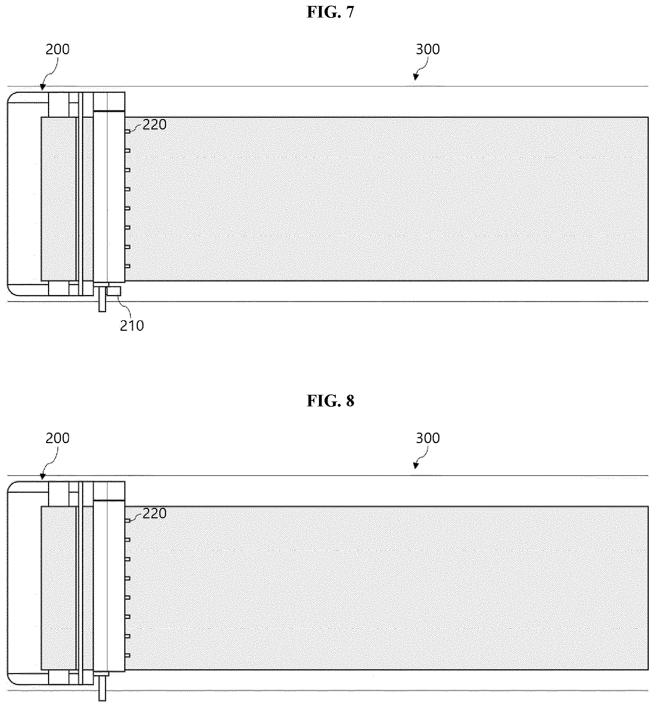

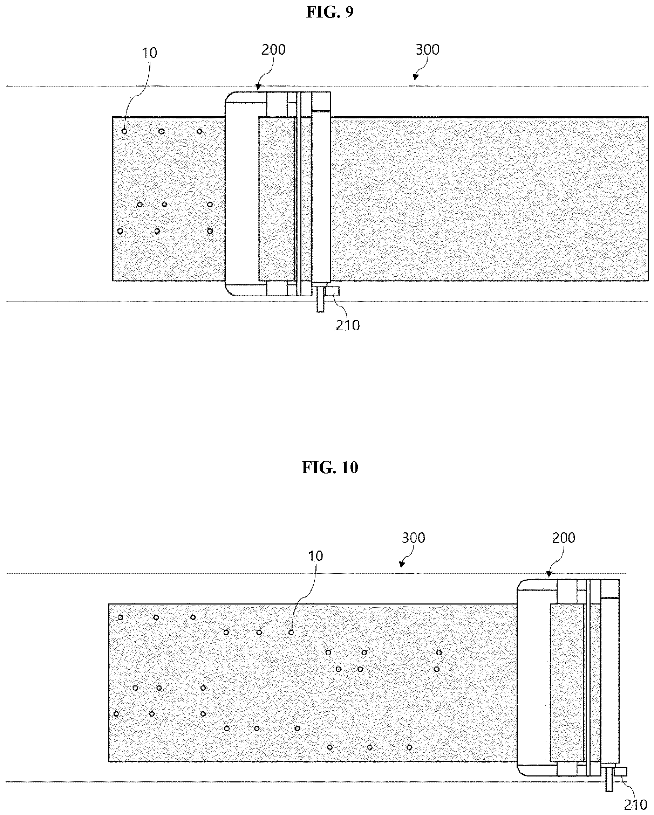

Referring to FIGs. 6 to 10, operations of the spreading machine 200 under the above-mentioned configuration will be explained. While the spreading machine 200 is transferred along the work table 300, first, the fabric is seated onto the work table 300. For example, as the spreading machine 200 located at the right side of the work table 300 is transferred to the left side along the work table 300, the fabric becomes seated onto the work table 300. Next, as shown in FIGs. 7 and 8, the cutting part 210 cuts the fabric, while being transferred in the transverse direction of the fabric. For example, while the cutting part 210 located under the fabric is transferred above the fabric, it cuts the fabric. In this case, the frame part 240 is kept to the state rotating in the direction distant from the fabric until the cutting part 210 completes the cutting for the fabric, and if the cutting is completed, the frame part 240 rotates to its original position. After that, as shown in FIGs. 9 and 10, while the spreading machine 200 is moved to its original position along the work table 200, the head part 220 prints the marks 10 on the fabric according to the numbering information. For example, after the spreading machine 200 located at the left side of the work table 300 is transferred to the right side along the work table 300 and then returns to its original position, the head part 220 prints the marks 10 on the surface of the cut fabric. In this case, the head part 220 prints the marks 10 at the positions set according to the numbering information.

As a result, the spreading machine 200 is transferred in one direction, while holding the front end of the fabric, and in a state of spreading the fabric, it cuts the fabric in the transverse direction of the fabric. Next, the spreading machine 200 returns to its original position, while releasing the holding state for the front end of the fabric, and accordingly, the head part 200 performs numbering on the surface of the fabric.

Hereinafter, an explanation of a spreading method according to the present invention will be given in detail with reference to the attached drawings.

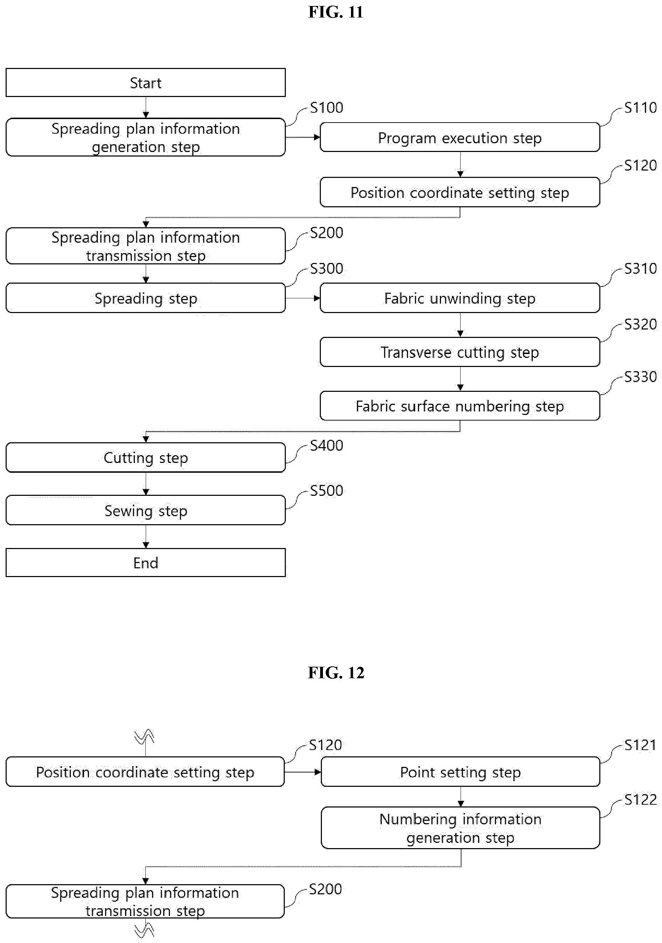

Referring to FIG 11, a spreading method using the spreading machine 200 according to the present invention includes a generation step S 100 of generating spreading plan information through a dedicated input program for spreading, a transmission step S200 of transmitting the spreading plan information to the spreading machine 200 after the generation step S100, and a spreading step S300 of allowing the spreading machine 200 to perform the spreading according to the spreading plan information after the transmission step S200. In this case, the spreading plan information includes numbering information. Further, the spreading method according to the present invention includes a cutting step S400 of cutting fabric after the spreading step S300 and a sewing step S500 of sewing the fabric after the cutting step S400.

First, the generation step S100 includes an execution step S110 of executing the dedicated input program for spreading and a setting step S120 of setting position coordinates on which numbering for the fabric is required after the execution step S110.

In more specific, in the execution step S110, the dedicated input program for spreading is executed by the manager to prepare for the generation of the spreading plan information. After the execution step S110 has been performed, the setting step S120 is performed by the manager to generate the spreading plan information through the dedicated input program for spreading.

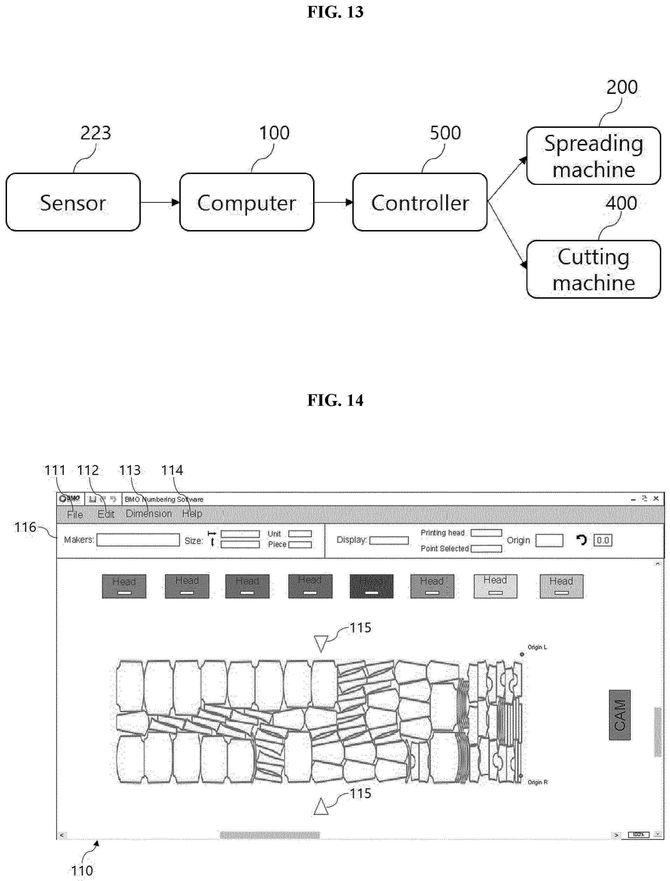

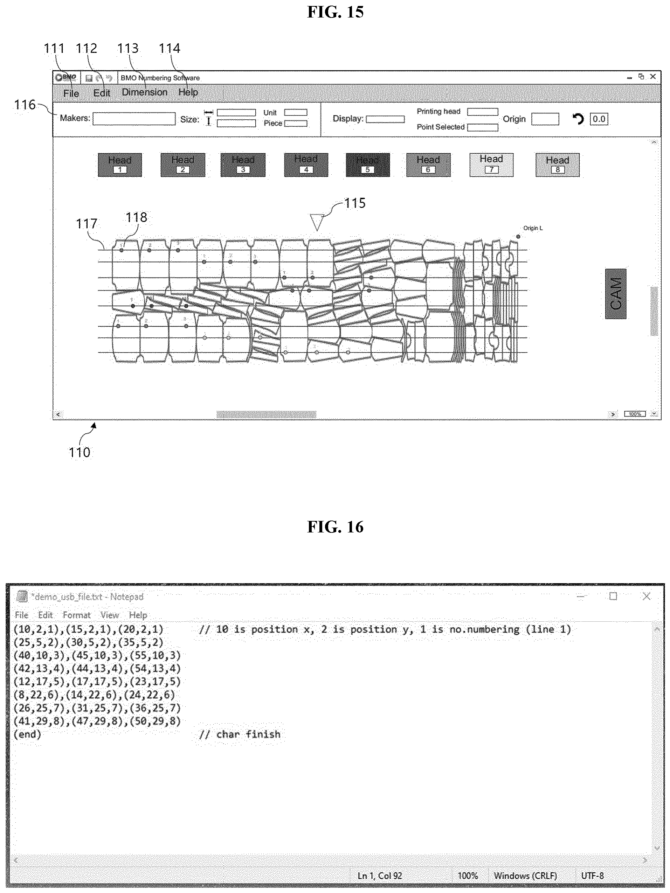

Referring to FIGs. 12 and 13, in the setting step S120, the position information of the head part 200 detected through the sensor 223 is displayed. In specific, the computer 100 receives the measured values of the sensor 223 and outputs the received values to the screen, thereby permitting the manager to easily recognize the current position of the head part 220. For example, the position of the head part 220 with six to ten heads is outputted on the screen. In this case, expected moving trajectory of the head part 220 is displayed according to the installation position of the head part 200. Referring to FIG 14, that is, if the computer 100 receives the measured values of the sensor 223, in a state where a CAD file including a cutting plan for fabric is outputted in the dedicated input program, the expected moving trajectories of the respective heads of the head part 200 are displayed, as shown in FIG 15. In specific, if the positions and intervals of the heads of the head part 220 are adjusted by the worker, the position information of the head part 220 sensed by the sensor 223 is transmitted to the computer 100, and accordingly, the computer 100 automatically adjusts the expected moving trajectories of the heads of the head part 200 on the screen according to the control in the position of the head part 200.

In this state, points at which the marks 10 are printed on the fabric are set by the manager. In this case, the positions, colors, and shapes of the marks 10 are set together. If the setting for the marks 10 is completed, after that, the numbering information is generated through the computer 100 by the manager, as shown in FIG 16. In specific, the numbering information includes the information of coordinates (positions), colors, and shapes of the marks 10. Next, the numbering information is transmitted to the spreading machine 200 to allow the spreading machine 200 to perform the spreading according to the spreading plan information.

Accordingly, the setting step S120 includes a point setting step S121 of setting points at which the marks 10 are needed and a numbering information generating step S122 of generating the numbering information inclusive of information of the points at which the marks 10 are needed and information of the coordinates of the marks 10 after the point setting step S 121.

Referring to FIG 13, the numbering spreading system according to the present invention further includes a controller 500 for receiving and storing the numbering information to control the head part 220 according to the numbering information. In specific, the controller 500 serves to control the head part 220, based on the numbering information received through USB, and allow the head part 220 to perform printing. That is, the controller 500 inputs the numbering information to a central processing unit CPU of the head part 220 to permit the head part 220 to print the marks 10.

Next, the transmission step S200 is the step of transmitting the spreading plan information to the spreading machine 200 by means of wireless or wired communication or the storage device. In this case, the spreading plan information may be transmitted to the cutting machine 400 as well as the spreading machine 200.

After that, the spreading step S300 includes an unwinding step S310 of unwinding the fabric, while the fabric is transferred in one direction in a state where the front end thereof is held, a cutting step S320 of cutting the fabric in a transverse direction after the unwinding step S310, and a numbering step S330 of performing numbering on the surface of the fabric after the cutting step S320. Next, the spreading method according to the present invention performs the cutting step S400 of cutting the spread fabric and the sewing step S500 of sewing the cut fabric, thereby manufacturing a product.

Next, FIGs, 14, 15, 17 and 18 show examples of various functions set by the manager on the interface screen 110 of the dedicated input program.

For example, the interface screen 110 includes a first selection area 111, a second selection area 112, a third selection area 113, a fourth selection area 114, a direction setting area 115, a basic setting area 116, a trajectory marking area 117, and a numbering marking area 118.

First, the first selection area 111 includes an item for generating a new file, an item for opening a file, an item for saving a file, an item for printing a file, an item for sending a file, an item for closing software, and an item for loading a recent file. In this case, the item for saving a file serves to save the file during editing and after the editing if an original file is edited and make a file designated with a new number to the format of DXF. The file is a DXF file having print head lines and number designated points.

Further, the second selection area 112 includes a display setting item, a setting item of the head part 220, a display rotation setting item, and a unit setting item. In this case, the manager selects the print heads by step, and a first line corresponds to a first print head. Further, all print heads are selected, and if necessary, the selection for some of the print heads is canceled.

The third selection area 113 is an item for setting sizes, and the fourth selection area 114 is an item for providing a usage method for the dedicated input program for spreading.

The direction setting area 115 is an item for allowing the manager to set a display direction, and the basic setting area 116 is an item for checking and correcting the set items.

The trajectory marking area 117 is an item for displaying the trajectories along which the heads of the head part 220 are transferred, and the numbering marking area 118 is an item for setting the marks 10 by the clicks of the manager and allowing the marks 10 to be seen to the manager. FIG 16 shows an example in which the numbering information is generated.

As a result, the numbering for the fabric is automatically performed through the spreading method according to the present invention, so that while being compared to the CAD file, the numbering s done, thereby advantageously making the product more easily.

It is to be understood that the disclosed embodiments are merely exemplary of the invention, which can be embodied in various forms. Those skilled in the art will envision many other possible variations within the scope of the present invention.

Therefore, the foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto and the equivalents thereof.

### [Explanations of Reference Numerals]

10. Mark
100: Computer
110: Interface screen
111: First selection area
112: Second selection area
113: Third selection area
114: Fourth selection area
115: Direction setting area
116: Basic setting area
117: Trajectory marking area
118: Numbering marking area
200: Spreading machine
210: Cutting part
220: Head part
220-1: First head
220-2: Second head
220-3: Third head
220-4: Fourth head
220-5: Fifth head
220-6: Sixth head
220-7: Seventh head
220-8: Eighth head
221: Clamp
222: Protrusion
223: Sensor
230: Shaft
240: Frame part
241: Position marker
250: Spreading machine body
251: Motor
252: Transfer motor
300: Work table
400: Cutting machine
500: Controller
S100: Generation step
S110: Execution step
S120: Setting step
S121: Point setting step
S122: Numbering information generation step
S200: Transmission step
S300: Spreading step
S310: Unwinding step
S320: Cutting step
S330: Numbering step
S400: Cutting step
S500: Sewing step

## Claims

1. A spreading method using a spreading machine, comprising:
a generation step of generating spreading plan information through a dedicated input program for spreading;
a transmission step of transmitting the spreading plan information to the spreading machine after the generation step; and
a spreading step of allowing the spreading machine to perform the spreading according to the spreading plan information after the transmission step,
wherein the spreading plan information comprises numbering information.

2. The spreading method according to claim 1, wherein the generation step comprises:
an execution step of executing the dedicated input program for spreading; and
a setting step of setting position coordinates on which numbering for fabric is required after the execution step.

3. The spreading method according to claim 1, wherein the spreading step comprises:
an unwinding step of unwinding the fabric, while the fabric is being transferred in one direction in a state where the front end thereof is held;
a cutting step of cutting the fabric in a transverse direction after the unwinding step; and
a numbering step of performing numbering on the surface of the fabric after the cutting step.

4. A numbering spreading system comprising:
a computer in which a dedicated input program for spreading is installed to generate spreading plan information; and
a spreading machine for receiving the spreading plan information from the computer to perform spreading according to the spreading plan information,
wherein the spreading plan information comprises numbering information.

5. The numbering spreading system according to claim 4, wherein the spreading machine comprises a head part disposed on one side thereof to perform printing according to the numbering information, so that after the spreading machine is transferred in one direction, while holding the front end of fabric, cuts the fabric in a transverse direction in a state of spreading the fabric, and then returns to an original position thereof in a state of releasing the holding state for the front end of the fabric, the head part performs numbering on the surface of the fabric.
